# EUROPÄISCHE PATENTSCHRIFT

(11) **EP 4 279 881 B1**
(45) Veröffentlichungstag und Bekanntmachung des Hinweises auf die Patenterteilung: **03.12.2025**
(21) Anmeldenummer: 22174639.9
(22) Anmeldetag: 20.05.2022
(51) Int. Cl.: G01F 25/20, G01F 23/00

(54) **SICHERE INBETRIEBNAHME UND BETRIEB EINES FÜLLSTANDMESSGERÄTS VIA SERVICE- UND NACHRÜST-MODUL**
SAFE COMMISSIONING AND OPERATION OF A LEVEL METER VIA SERVICING AND RETROFITTING MODULE
MISE EN SERVICE ET FONCTIONNEMENT SÉCURISÉ D'UN APPAREIL DE MESURE DE NIVEAU DE REMPLISSAGE PAR L'INTERMÉDIAIRE DU MODULE DE SERVICE ET DE MISE À NIVEAU

(43) Veröffentlichungstag der Anmeldung: 22.11.2023
(73) Patentinhaber: VEGA Grieshaber KG, 77709 Wolfach (DE)
(72) Erfinder: Hoferer, Christian, 77652 Offenburg (DE); Kaufmann, Manuel, 77791 Berghaupten (DE)
(74) Vertreter: Maiwald GmbH

(56) Entgegenhaltungen:
- WO-A1-2021/223854
- CN-U- 215 987 005
- US-A1- 2010 175 012
- US-A1- 2014 336 988

## Beschreibung

### Gebiet der Erfindung

Die Erfindung betrifft ein Füllstandmessgerät, ein Verfahren für die sichere Inbetriebnahme und den sicheren Betrieb eines Füllstandmessgeräts via Service- und Nachrüst-Modul und eine Verwendung des Füllstandmessgerätes unter der Bedienung mit einem Bedienterminal in der Form eines Service- und Nachrüst-Modul zum Anschluss an ein Füllstandmessgerät.

### Hintergrund

Bei einer Inbetriebnahme und dem Betrieb eines Füllstandmessgeräts, sind in vielen Fällen eine Vielzahl von Referenz-Messungen erforderlich, um eine hohe Sicherheit und/oder Messgenauigkeit nach der Inbetriebnahme des Füllstandmessgeräts zu erhalten. In der Prozessindustrie werden zunehmend Anforderungen an Füllstandsensoren gestellt, dass diese nicht nur eine Messaufgabe erfüllen, sondern vielmehr diese Messaufgabe auch sicher erfüllen müssen.

WO 2021/223854 A1 beschreibt ein Nachrüstmodul für ein Feldgerät und ein modular aufgebautes Feldgerät mit einer Feldgeräteelektronik mit wenigstens einer Kommunikationsschnittstelle, wobei das Nachrüstmodul ein Sicherheitsmodul aufweist, wobei das Sicherheitsmodul mit der Feldgeräteelektronik derart zusammenarbeitet, dass eine vorgegebene IT-Sicherheitsstufe erreicht wird.

CN 215 987 005 U beschreibt ein Feldgerät der Prozessautomatisierungstechnik und ein Nachrüstmodul für das Feldgerät. Das Feldgerät weist Feldgeräteelektronik mit einer Kommunikationsschnittstelle und einem Sicherheitsmodul auf.

### Offenbarung der Erfindung

Die Erfindung offenbart ein Service- und Nachrüst-Modul für Füllstandsensoren für den sicheren Betrieb und Inbetriebnahme von Sensoranwendungen. Die Erfindung ist dazu geeignet, die Sicherheit eines Füllstandmessgeräts zu erhöhen.

Die vorliegende Erfindung ermöglicht vorteilhaft, dass die Inbetriebnahme oder die Sicherheitsfunktion durch ein Service- und Nachrüst-Modul bereitgestellt wird, das temporär (beispielsweise für die Inbetriebnahme) oder konstant (für den laufenden Betrieb) am Sensor angeschlossen wird.

Die Erfindung offenbart ein Service- und Nachrüst-Modul und ein Verfahren zur sicheren Inbetriebnahme und sicheren Betrieb eines Füllstandsensors. Anders als im bekannten Stand der Technik wird die Sicherheitsfunktion über ein Service-Modul realisiert.

Mit anderen Worten ausgedrückt, je nach Ausgestaltung der Sicherheitsfunktion bzw. des Sicherheitslevels kann das Service Modul temporär oder konstant an das Füllstandmessgerät angeschlossen sein. Bei einem niedrigen Sicherheitslevel genügt es beispielsweise das Service-Modul nur kurzzeitig beispielsweise für die Inbetriebnahme am Füllstandsensor zu befestigen. Bei höheren Sicherheitslevels kann das Service Modul konstant am Sensor angeschlossen bleiben.

Der temporäre Betrieb bei der Inbetriebnahme hat den Vorteil, dass Hardware Komponenten eingespart werden können. Auch kann so während der Inbetriebnahme beispielsweise auf einen Cloud-Dienst zurückgegriffen werden, was im laufenden Betrieb nicht nötig sein muss. Auch für den konstanten Betrieb ist das separate Service Modul von Vorteil, da nicht alle Füllstandsensoren, die produziert werden den hohen und ggf. unnötigen Sicherheitslevel erreichen müssen. Auch hier sind Hardware Komponenten einzusparen.

Gemäß Aspekten der Erfindung wird ein Service- und Nachrüstvorrichtung für ein Füllstandmessgerät, ein Füllstandmessgerät, ein Verfahren für einen Service- und Nachrüstprozess eines Füllstandmessgerät und eine Verwendung eines Füllstandmessgeräts gemäß den Merkmalen der unabhängigen Ansprüche, vorgeschlagen.

Vorteilhafte Ausgestaltungen sind Gegenstand der abhängigen Ansprüche sowie der nachfolgenden Beschreibung.

Gemäß einem Aspekt der vorliegenden Erfindung wird eine Service- und Nachrüstvorrichtung für ein Füllstandmessgerät bereitgestellt, wobei die Service- und Nachrüstvorrichtung dazu ausgebildet ist, während einer Inbetriebnahme des Füllstandmessgerätes und/oder während eines Betriebs des Füllstandmessgerätes am Füllstandmessgerät angeschlossen zu sein; wobei die Service- und Nachrüstvorrichtung dazu ausgebildet ist, mit einem Bedienterminal für das Füllstandmessgerät gekoppelt zu werden; und wobei die Service- und Nachrüstvorrichtung dazu ausgebildet ist, zumindest eine zusätzliche Funktionalität von einer Hard- oder Softwarekomponente für die Inbetriebnahme des Füllstandmessgeräts und/oder für den Betrieb des Füllstandmessgeräts zumindest temporär nachzurüsten.

Gemäß einer Ausführungsform der Erfindung ist vorgesehen, dass die Service- und Nachrüstvorrichtung mit einer Überwachungsfunktion für das Füllstandmessgerät ausgerüstet ist, zum Überwachen des Füllstandmessgeräts während der Inbetriebnahme des Füllstandmessgeräts und/oder während des Betrieb des Füllstandmessgeräts.

Gemäß einer Ausführungsform der Erfindung ist vorgesehen, dass ein Bedienterminal nach einer Kopplung mit der Service- und Nachrüstvorrichtung oder die Service- und Nachrüstvorrichtung dazu ausgebildet ist, Schritte zur Inbetriebnahme des Füllstandmessgeräts an einen Benutzer anzuleiten.

Gemäß einer Ausführungsform der Erfindung ist vorgesehen, dass die Service- und Nachrüstvorrichtung dazu ausgebildet ist, eine zusätzliche Funktion am Füllstandmessgerät freizugeben.

Gemäß einer Ausführungsform der Erfindung ist vorgesehen, dass die Hardware-Komponente einen Beschleunigungssensor, oder einen Temperatursensor, oder einen Feuchtesensor umfasst und in der Service- und Nachrüstvorrichtung fest oder temporär als Kaskadierung integriert ist.

Gemäß einer Ausführungsform der Erfindung ist vorgesehen, dass die Service- und Nachrüstvorrichtung dazu ausgebildet ist, mit einem Cloud-Dienst zu kommunizieren, um mittels des Cloud-Dienstes eine Güte des Messsignals zu ermitteln, um einen sicheren Betrieb des Füllstandmessgeräts zu gewährleisten.

Gemäß einer Ausführungsform der Erfindung ist vorgesehen, dass die Service- und Nachrüstvorrichtung dazu ausgebildet ist, bei fester Montage aus einem unsicheren Betrieb des Füllstandmessgerätes einen sicheren Betrieb des Füllstandmessgerätes nachrüstet.

Gemäß einer Ausführungsform der Erfindung ist vorgesehen, dass die Service- und Nachrüstvorrichtung dazu ausgebildet ist, ein Sicherheitsniveau des Füllstandmessgerätes zu erhöhen.

Gemäß einer Ausführungsform der Erfindung ist vorgesehen, dass die Service- und Nachrüstvorrichtung dazu ausgebildet ist, nach der Inbetriebnahme beim Abziehen, insbesondere bei fester Montage spätestens nach einer vorbestimmten Zeit, das Füllstandmessgerät gegen erneute Änderungen zu sperren.

Gemäß einer Ausführungsform der Erfindung ist vorgesehen, dass die Service- und Nachrüstvorrichtung dazu ausgebildet ist, auf einen Anwender personalisiert zu werden, um die Inbetriebnahme zu dokumentieren und den Anwender zu identifizieren.

Gemäß einer Ausführungsform der Erfindung ist vorgesehen, dass die Service- und Nachrüstvorrichtung einen Prozessor aufweist und dazu ausgebildet ist, bei der Inbetriebnahme Informationen mit dem Prozessor zu verarbeiten.

Gemäß einer Ausführungsform der Erfindung ist vorgesehen, dass die Service- und Nachrüstvorrichtung eine Funkschnittstelle aufweist.

Gemäß einer Ausführungsform der Erfindung ist vorgesehen, dass die Service- und Nachrüstvorrichtung mit Überwachungsfunktionen für das Füllstandmessgerät und/oder Funktionen zur Inbetriebnahme für das Füllstandmessgerät ausgerüstet ist.

Gemäß einer Ausführungsform der Erfindung ist vorgesehen, dass die Service- und Nachrüstvorrichtung dazu ausgebildet ist, zusätzliche Funktionen am Füllstandmessgerät freizugeben. So kann erst durch Kontaktierung der Service- und Nachrüstvorrichtung die Inbetriebnahme im Füllstandmessgerät freigeschalten werden. D.h. bisher inaktive oder nicht zugängliche Softwarefunktionen im Füllstandmessgerät werden durch die Service- und Nachrüstvorrichtung aktiviert bzw. zugänglich. Neben der Inbetriebnahme selbst, sind auch Überwachungsfunktionen, Diagnosemaßnahmen oder Hardwarekomponenten selbst erst nach einer zumindest temporären Kontaktierung der Service- und Nachrüstvorrichtung aktiv, bedien- und verwendbar.

Gemäß einer Ausführungsform der Erfindung ist vorgesehen, dass die Service- und Nachrüstvorrichtung dazu ausgebildet ist, mindestens eine Hardware-Komponente für das Füllstandmessgerät, insbesondere zumindest temporär, bereitzustellen.

Gemäß einer Ausführungsform der Erfindung ist vorgesehen, dass die Hardware-Komponente einen Beschleunigungssensor, oder einen Temperatursensor, oder einen Feuchtesensor umfasst und in der Service- und Nachrüstvorrichtung integriert ist.

Gemäß einer Ausführungsform der Erfindung ist vorgesehen, dass die Service- und Nachrüstvorrichtung dazu ausgebildet ist, mit einem Cloud-Dienst zu kommunizieren, um mittels des Cloud-Dienstes eine Güte des Messsignals zu ermitteln, um einen sicheren Betrieb des Füllstandmessgeräts zu gewährleisten.

Gemäß einer Ausführungsform der Erfindung ist vorgesehen, dass die Service- und Nachrüstvorrichtung dazu ausgebildet ist, bei fester Montage aus einem unsicheren Betrieb des Füllstandmessgerätes einen sicheren Betrieb des Füllstandmessgerätes nachrüstet.

Gemäß einer Ausführungsform der Erfindung ist vorgesehen, dass die Service- und Nachrüstvorrichtung dazu ausgebildet ist, ein Sicherheitsniveau des Füllstandmessgerätes zu erhöhen.

Gemäß einer Ausführungsform der Erfindung ist vorgesehen, dass die Service- und Nachrüstvorrichtung dazu ausgebildet ist, nach der Inbetriebnahme beim Abziehen, insbesondere bei fester Montage spätestens nach einer gewissen Zeit, das Füllstandmessgerät gegen erneute Änderungen zu sperren.

Gemäß einer Ausführungsform der Erfindung ist vorgesehen, dass die Service- und Nachrüstvorrichtung dazu ausgebildet ist, auf einen Anwender personalisiert zu werden, um die Inbetriebnahme zu dokumentieren und den Anwender zu identifizieren.

Gemäß einem Aspekt der vorliegenden Erfindung wird ein Hardware-Dongle mit einer Steckverbindungsvorrichtung zum Einstecken in ein Füllstandmessgerät und mit einer Service- und Nachrüstvorrichtung bereitgestellt.

Gemäß einem Aspekt der vorliegenden Erfindung wird ein Hardware-Modul mit Schleifkontakten zum Aufdrehen und Einrasten an ein Füllstandmessgerät und mit einer Service- und Nachrüstvorrichtung bereitgestellt.

Gemäß einem Aspekt der vorliegenden Erfindung wird ein Verfahren für einen Service- und Nachrüstprozess für ein Füllstandmessgerät bereitgestellt, wobei eine im Service- und Nachrüstprozess verwendete Service- und Nachrüstvorrichtung dazu ausgebildet ist, während einer Inbetriebnahme des Füllstandmessgerätes und/oder während eines Betriebs des Füllstandmessgerätes am Füllstandmessgerät angeschlossen zu sein, wobei das Verfahren folgende Verfahrensschritte umfasst:
Das Verfahren umfasst dabei die Schritte Koppeln der Service- und Nachrüstvorrichtung mit einem Bedienterminal und zumindest temporäres Nachrüsten von zumindest einer zusätzlichen Funktionalität von einer Hard- oder Softwarekomponente für die Inbetriebnahme des Füllstandmessgeräts und/oder für den Betrieb des Füllstandmessgeräts.

Gemäß einer Ausführungsform der Erfindung ist vorgesehen, dass das Verfahren ausgeführt wird unter Verwendung von einem Füllstandmessgerät.

Gemäß einer Ausführungsform der Erfindung ist vorgesehen, dass das Verfahren ausgeführt wird von einem Füllstandmessgerät und einem Hardware-Dongle mit einer Steckverbindungsvorrichtung.

Gemäß einer Ausführungsform der Erfindung ist vorgesehen, dass das Verfahren ausgeführt wird von einem Füllstandmessgerät und einem Hardware-Modul mit Schleifkontakten.

Gemäß einem Aspekt der vorliegenden Erfindung wird eine Verwendung des Füllstandmessgerät zur Detektion eines Füllstands eines Mediums und/oder zur Prozesskontrolle bereitgestellt.

Im Folgenden werden mit Verweis auf die Figuren weitere Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

Kurze Beschreibung der Figuren
Fig. 1 zeigt ein Füllstandmessgerät gemäß Stand der Technik verbunden mit einer Steuerung.
Fig. 2 zeigt ein Service Modul mit vielen Komponenten gemäß einer Ausführungsform der Erfindung.
Fig. 3 zeigt ein Service Modul in minimalistischer Ausprägung mit wenigen Komponenten zur vor Ort Bedienung gemäß einer Ausführungsform der Erfindung.
Fig. 4 zeigt ein Service Modul in minimalistischer Ausprägung zur Adaptierung des Füllstandmessgeräts an ein Bedienterminal gemäß einer Ausführungsform der Erfindung.
Fig. 5 zeigt ein Füllstandmessgerät mit Service Modul nachgerüstet gemäß einer Ausführungsform der Erfindung.
Fig. 6 zeigt ein Dongle oder Hardware-Modul mit einer Steckverbindungsvorrichtung zum Einstecken in oder Aufdrehen auf ein Füllstandmessgerät und mit einer Service- und Nachrüstvorrichtung gemäß einer weiteren Ausführungsform der vorliegenden Erfindung

### Detaillierte Beschreibung von Ausführungsformen

Im Folgenden erfolgt eine Beschreibung von Ausführungsbeispielen gemäß Ausführungsformen der Erfindung.

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Das Service- und Nachrüst-Modul (auch in Form eines (USB-)Dongles) zum Anschluss an ein Füllstandmessgerät für die sichere Inbetriebnahme und den sicheren Betrieb kann dabei in folgenden Ausführungsformen realisiert werden.

Das Service- und Nachrüst-Modul kann beispielsweise zumindest während der Inbetriebnahme des Sensors am Sensor angeschlossen sein gemäß einer Ausführungsform der Erfindung.

Das Service- und Nachrüst-Modul kann beispielsweise zur Inbetriebnahme am Füllstandmessgerät angeschlossen sein gemäß einer Ausführungsform der Erfindung.

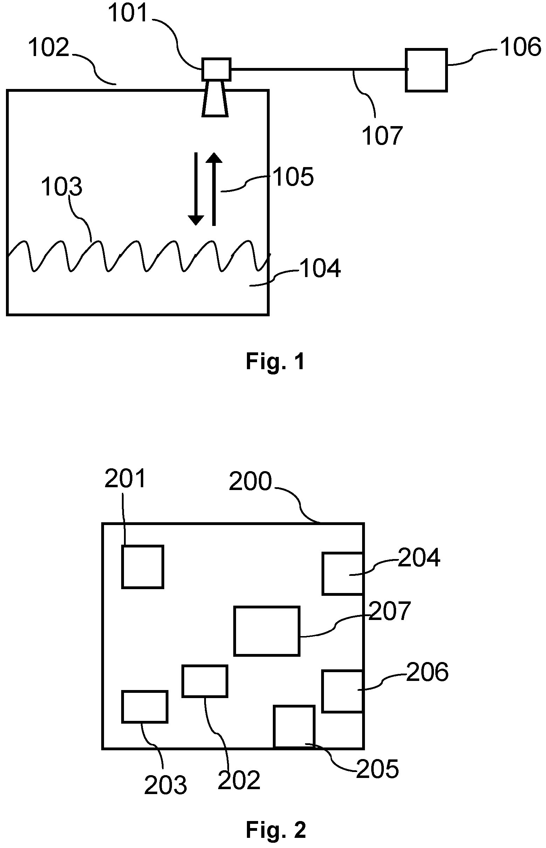

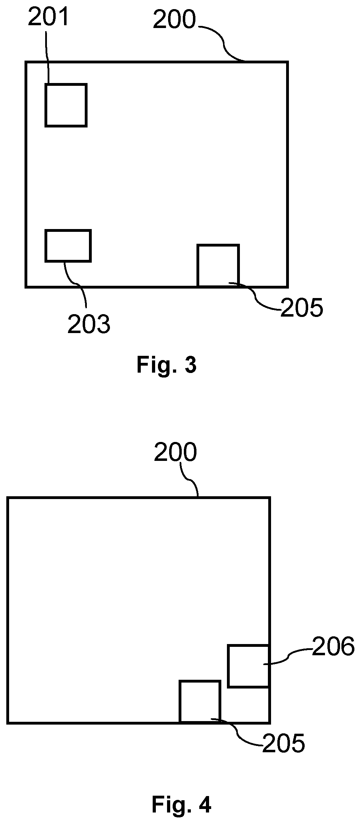

Das Service- und Nachrüst-Modul kann selbst eine Schnittstelle aufweisen, welche eine Daten- oder Kommunikationsverbindung zu einem Bedienterminal liefert, etwa über PC oder Smartphone bzw. ein Mobiltelefon mit umfangreichen Computer-Funktionalitäten, das (Teil-)Schritte für die Inbetriebnahme (z.B. in Form eines Assistenten) vorgibt (Figur 2 und Figur 4).

Insbesondere verfügt das Service- und Nachrüst-Modul eine Schnittstelle zu einem mobilen Bedien- und Anzeigegerät. Dabei kann eine Funkschnittstelle z.B. in Form von Bluetooth/WLAN zum Einsatz kommen gemäß einer Ausführungsform der Erfindung.

Das Service- und Nachrüst-Modul kann beispielsweise mit Überwachungsfunktionen und/oder Funktionen zur Inbetriebnahme ausgerüstet sein, die nicht im Füllstandmessgerät selbst vorhanden sind, wie in Figur 2 dargestellt. Dabei verfügt das Service- und Nachrüst-Modul über Zusatzsoftware für die Inbetriebnahme und bearbeitet diese Informationen im eigenen Prozessor.

Das Service- und Nachrüst-Modul kann beispielsweise dazu ausgebildet sein, dass es zusätzliche Funktionen am Füllstandmessgerät freigibt gemäß einer Ausführungsform der Erfindung.

Das Service- und Nachrüst-Modul kann beispielsweise dazu ausgebildet sein, dass es Hardware Komponenten zumindest temporär nachrüstet, die nicht im Sensor selbst vorhanden sind gemäß einer Ausführungsform der Erfindung.

In einer Ausführungsform der vorliegenden Erfindung kann dabei ein Beschleunigungssensor ausgebildet sein, der prüft, ob der Sensor senkrecht zur Füllgutoberfläche eingebaut wurde, wie in Figur 2 dargestellt, oder ein Temperaturfühler zum Messen der Prozesstemperatur. Oder ein Feuchtesensor, der die relative Luftfeuchtigkeit mit den zugelassenen Umweltbedingungen abgleicht gemäß einer Ausführungsform der Erfindung.

Dabei können die Sensoren selbst temporär am Service- und Nachrüst-Modul angebracht sein und so eine Kaskadierung bzw. eine Verkettung mehrerer Module oder Baugruppen ausbilden gemäß einer Ausführungsform der Erfindung.

In einer Ausführungsform der vorliegenden Erfindung kann das Service- und Nachrüst-Modul mit einem Cloud-Dienst kommunizieren, um anhand des Messsignals beim Cloud-Dienst die Güte des Messsignals zu ermitteln, um einen sicheren Betrieb zu gewährleisten gemäß einer Ausführungsform der Erfindung.

In einer Ausführungsform der vorliegenden Erfindung kann das Service- und Nachrüst-Modul bei fester Montage aus einem unsicheren Betrieb des Messgeräts einen sicheren Betrieb nachrüsten, auch als SIL nachrüsten bezeichnet.

Der sichere Betrieb zeichnet sich dadurch aus, dass der Sensor entweder zuverlässig und gemäß seiner z.B. in einem Datenblatt aufgeführten Genauigkeit den Füllstand bestimmt und diesen an einer Schnittstelle z.B. einem Leitsystem zur Verfügung stellt oder die Schnittstelle eine Störung meldet, wenn die Bestimmung des Füllstandes nicht sicher oder innerhalb der angegebenen Genauigkeit gewährleistet werden kann.

Die Bestimmung des Füllstandes kann zudem als nicht sicher erachtet werden, wenn elektronische Bauteile z.B. durch Verschleiß nicht mehr erwartungsgemäß funktionieren oder das Messsignal selbst Störungen aufweist.

Die Anforderungen an einen sicheren Betrieb eines Füllstandmessgeräts bzw. ein sicheres Füllstandmessgerät sind normativ geregelt und werden durch eine Norm innerhalb Sicherheitsanforderungsstufen festgehalten. Die Sicherheitsanforderungsstufe ist ein Begriff aus dem Gebiet der Funktionalen Sicherheit und wird in der internationalen Normung gemäß IEC 61508/IEC61511 auch als Sicherheitsstufe oder Sicherheits-Integritätslevel (entlehnt aus dem englischen ,safety integrity level', kurz SIL).

In einer Ausführungsform der vorliegenden Erfindung kann das Service Modul bei fester Montage das Sicherheitsniveau des bestehenden Sensors erhöhen, auch als SIL-Level erhöhen bezeichnet.

In einer Ausführungsform der vorliegenden Erfindung kann das Service Modul HardwareKomponenten bereitstellen, um ein Sicherheitsniveau zu erreichen.

In einer Ausführungsform der vorliegenden Erfindung kann ein sicherer Stromausgang bereitgestellt werden, der z.B. redundante Hardwarekomponenten aufweist, was das Basis-Füllstandmessgerät nicht leistet. Das Service Modul bleibt am Füllstandmessgerät und rüstet somit einen SIL-Level nach oder erhöht einen bestehenden SIL-Level.

In einer Ausführungsform der vorliegenden Erfindung kann das Service Modul nach der Inbetriebnahme beim Abziehen (oder bei fester Montage spätestens nach einer gewissen Zeit) den Sensor gegen erneute Änderungen sperren.

In einer Ausführungsform der vorliegenden Erfindung kann das Service Modul auf einen Service-Techniker oder einen Benutzer oder einen Kunden personalisiert sein, um die Inbetriebnahme zu dokumentieren und den Anwender zu identifizieren.

Die vorliegende Erfindung wird im Folgenden anhand eines Radarfüllstandmessgeräts näher erläutert. Die vorliegende Erfindung ist jedoch auf jegliche Art von Füllstandsensoren übertragbar und implementiertbar.

Die vorliegende Erfindung umfasst insbesondere den Bereich von Füllstandmessgeräten, die für den sicheren Betrieb (beispielsweise ein vorbestimmtes SIL-Level) einer Sensoranwendung, vorgesehen sind. Hierzu sind gewisse Anforderungen an die Inbetriebnahme und an den Betrieb selbst gestellt.

So erfordert die Inbetriebnahme das Durchführen von Schritten, die dann den sicheren Betrieb erst ermöglichen. Die Schritte der Inbetriebnahme können z.B. die Prüfung der Einbausituation, die Prüfung des Messsignals (nur während der Inbetriebnahme), die Prüfung der Betriebstemperatur, Anfahren von Messwerten, oder das Einstellen, Rücklesen und gegen Veränderung sichern von Konfigurationswerten sein.

Auch während des Betriebs, d.h. nach Abschluss der Inbetriebnahme sind besondere Anforderungen an solch ein für den sicheren Betrieb ausgelegtes Füllstandmessgerät gestellt. So wird z.B. auch während des Betriebs die Hardware zyklisch auf Fehler überprüft, das Messsignal beurteilt, die Schnittstelle zur Steuerung überwacht oder Speicherbereiche und das Rechenwerk des µControllers selbst überprüft.

Das Service- und Nachrüst-Modul hilft zum einem dem Anwender bei der Durchführung der Inbetriebnahme-Schritte, zum anderen jedoch ermöglicht es erst den sicheren Betrieb eines Füllstandmessgeräts durch nachrüsten von Hard- oder Softwarekomponenten.

Die Fig. 1 zeigt ein Füllstandmessgerät gemäß Stand der Technik verbunden mit einer Steuerung.

Die Figur 1 zeigt dabei ein Füllstandmessgerät 101, einen Tank 102, einen Füllstand bzw. Füllgutoberfläche 103, ein Füllmedium 104, ein gesendetes und reflektiertes Messsignal 105, eine Steuerung bzw. ein Leitsystem 106 und eine Schnittstelle 107 zwischen Sensor und Steuerung.

Die Figur 1 zeigt beispielhaft eine Sensoranwendung eines Radarfüllstandmessgeräts 101 montiert auf einem Tank 102 zum Messen eines Füllstandes 103 eines Füllmediums bzw. Mediums 104, beispielsweise Wasser oder Kunststoffgranulat.

Das Radarfüllstandmessgerät sendet ein Messsignal Richtung Füllgutoberfläche, wo es reflektiert wird, aus, empfängt das reflektierte Messsignal und ermittelt die Distanz zur Füllgutoberfläche, woraus sich dann der Füllstand im Tank ableiten lässt.

Die Figur 1 symbolisiert ein klassisches Füllstandmessgerät dem Stand der Technik entsprechend.

Das Füllstandmessgerät 101 ist an einer Steuerung 106 angeschlossen, die den ermittelten Füllstand 103 z.B. überwacht oder protokolliert. Bei der Verbindung handelt es sich beispielsweise um eine für den sicheren Betrieb zugelassene, beispielsweise im Strombereich von 4 bis 20 mA betriebene Stromschnittstelle.

Auch drahtlose oder anders geartete Verbindungen sind möglich und werden durch die Erfindung nicht eingeschränkt. Die Sensoranwendung als ganze kann hier als sicherheitskritische Anwendung oder gewöhnliche Anwendung aufgefasst werden.

Die Fig. 2 zeigt ein Service Modul mit vielen Komponenten gemäß einer Ausführungsform der vorliegenden Erfindung. Die Bezeichnung Service Modul (oder Service- und Nachrüst-Modul) kann eine Service- und Nachrüstvorrichtung beinhalten oder selbst als eine Service- und Nachrüstvorrichtung ausgebildet sein.

Die Fig. 2 zeigt ein Service Modul 200, ein Display 201, ein Beschleunigungssensor 202, ein Bedienfeld 203, eine Schnittstelle 204 zur sicheren Verbindung zwischen Service Modul und Leitsystem, eine Schnittstelle 205 zur Verbindung mit dem Füllstandmessgerät, eine Schnittstelle 206 zur Verbindung mit einem Bedienterminal und einen Mikrocontroller 207 bzw. ein Steuerwerk 207 zum Ausführen oder Vorgeben von Verfahrensschritten

Die Figur 2 zeigt eine Ausgestaltung des Service Moduls 200. Alle aufgezeigten Komponenten sind in beliebigen Varianten kombinierbar und dienen nur zur Illustration einer einzigen Form des Service Moduls. Darüber hinaus sind nicht alle denkbaren Komponenten aufgeführt. Eine separate Schnittstelle zur Konnektivität mit einem Cloud-Dienst oder z.B. ein zusätzlicher Temperatursensor mit Messfühler sind in Ergänzung denkbar. Auch sind die Komponenten miteinander kombinierbar.

Das Display 201 kann beispielsweise als Touch-Display ausgestaltet sein, womit das Bedienfeld 203 und das Display als solches, als kombinierte Komponente angesehen werden kann. Beinhaltet das Füllstandmessgerät bereits eine entsprechende Komponente oder ist diese gemäß der Norm nicht für den sicheren Betrieb erforderlich, so kann diese im Service-Modul entfallen.

Im Allgemeinen kann jedoch das Service- und Nachrüst-Modul zumindest aus der Schnittstelle zum Füllstandmessgerät 205 und mindestens einer weiteren zusätzlichen Komponente zusammengestellt werden.

Das Service- und Nachrüst-Modul ist auf den jeweiligen Anwendungsfall im Zusammenspiel mit dem Füllstandmessgerät konzipiert. Ist es für die Sicherheitsfunktion essentiell, dass das Füllstandmessgerät senkrecht zur Füllgutoberfläche ausgerichtet sein muss, so ist die Komponente Beschleunigungssensor 202 zwingend erforderlich.

Ist für die Inbetriebnahme ein (Teil-)Schritte wie z.B. eine Bewertung des Messsignals durchzuführen, so kann dies ein Mikrocontroller 207 oder ein Steuerwerk 207 oder eine Konnektivität zu einem Cloud-Dienst automatisch leisten, indem das Service- und Nachrüst-Modul die digitale Repräsentation des Messsignals intern durch den Mikrocontroller 207 bewertet oder extern an einen Cloud-Dienstes übermittelt, wo die digitale Repräsentation des Messsignals beispielsweise mit einer Datenbank abgeglichen und bewertet wird.

Sind die Schritte oder ein Teil der Schritte nur manuell von einem Techniker durchzuführen, so erfordert das Service Modul ein Bedienfeld und ein Display oder eine Schnittstelle zu einem Bedienterminal.

Die Anweisung welche Schritte manuell durchzuführen sind, werden dann am Display 201 des Service- und Nachrüst-Moduls oder am Bedienterminal (PC/Handy) angezeigt. Das Service- und Nachrüst-Modul beinhaltet somit ein Verfahren (in Form von Software) zur Inbetriebnahme oder für den Betrieb eines sicherheitskritischen Füllstandsensors, das nicht im Füllstandmessgerät vorhanden ist.

Es ist denkbar, dass dieses Verfahrens nicht im Service- und Nachrüst-Modul hinterlegt ist, sondern (beispielsweise in Form von Software) in einem Bedienterminal (PC/Handy) selbst.

Werden die Schritte auch zyklisch während des laufenden Betriebs z.B. als zeit bzw. ereignisgesteuerte Schritte ausgeführt, um den sicheren Betrieb zu gewährleisten, kann das Service Modul am Füllstandmessgerät angeschlossen bleiben.

Die Fig. 3 zeigt ein Service Modul in minimalistischer Ausprägung mit wenigen Komponenten zur vor Ort Bedienung gemäß einer Ausführungsform der Erfindung.

Die Figur 3 zeigt eine reduzierte Ausprägungsform des Service- und Nachrüst-Modul 200 umfassend ein Display 201, ein Bedienfeld 203 und eine Schnittstelle zum Füllstandmessgerät 205.

Das Service- und Nachrüst-Modul 200 gibt beispielsweise auf dem Display Schritte zur Inbetriebnahme vor und ein Service Techniker kann über das Bedienfeld die Schritte z.B. quittieren.

Die Figur 4 zeigt ein Service- und Nachrüst-Modul in minimalistischer Ausprägung zur Adaptierung des Füllstandmessgeräts an ein Bedienterminal gemäß einer Ausführungsform der Erfindung.

Die Figur 4 zeigt eine reduzierte Ausprägungsform des Service- und Nachrüst-Moduls 200 bestehend aus der Schnittstelle zum Füllstandmessgerät 205 und einer Schnittstelle zu einem Bedienterminal 206.

Diese Art von Service- und Nachrüst-Modul 200 eignet sich dabei gemäß einem Ausführungsbeispiel der vorliegenden Erfindung insbesondere zur Adaptierung eines Füllstandmessgeräts an ein erweitertes Bedienterminal (PC/Handy).

Das Bedienterminal kann gemäß einem Ausführungsbeispiel der vorliegenden Erfindung auch für die Inbetriebnahme ausgeprägt sein.

Gemäß einer Ausführungsform der vorliegenden Erfindung kann das Bedienterminal Schritte oder Teilschritte zur Inbetriebnahme des Füllstandmessgeräts vorgeben oder für einen Bediener anleiten. Es kann den Bediener, der die Inbetriebnahme vornimmt, anweisen, bestimmte Parametrierungen vorzunehmen, Einstellungen zu überprüfen oder das Füllstandmessgerät gegen unzulässige Zugriffe z.B. mittels Passwort zu schützen.

Auch sind gemäß einem Ausführungsbeispiel der vorliegenden Erfindung gezielte Abfragen bezüglich der Anwendung durch einen Assistenten denkbar. Das Service- und Nachrüst-Modul fungiert hier hauptsächlich als Adapter zwischen Füllstandmessgerät und Bedienterminal.

Die Eigenschaft des Adapters lässt sich gemäß einem Ausführungsbeispiel der vorliegenden Erfindung durch folgendes Beispiel veranschaulichen. So ist z.B. die Parametrierung nach erfolgreicher Inbetriebnahme zu schützen.

Die Software des Bedienterminals weist gemäß einem Ausführungsbeispiel der vorliegenden Erfindung beispielsweise den Bediener an, ein Passwort zu vergeben, welches (verschlüsselt) vom Bedienterminal über das Service- und Nachrüst-Modul zum Füllstandmessgerät übertragen wird.

Das Füllstandmessgerät selbst schützt dann gemäß einem Ausführungsbeispiel der vorliegenden Erfindung die vorgenommene Parametrierung und gibt diese nur wieder über das Passwort frei. Gleichermaßen verhält es sich bei der Übertragung der Parametrierung selbst, die für eine Inbetriebnahme erforderlich ist.

Sind (Teil-)Schritte gemäß einem Ausführungsbeispiel der vorliegenden Erfindung durch das Service- und Nachrüst-Modul automatisiert abzuarbeiten, sodass manuelle Eingriffe eines Bedieners reduziert werden können, so kann das Service- und Nachrüst-Modul gemäß anderer Figuren weitere Komponenten aufweisen.

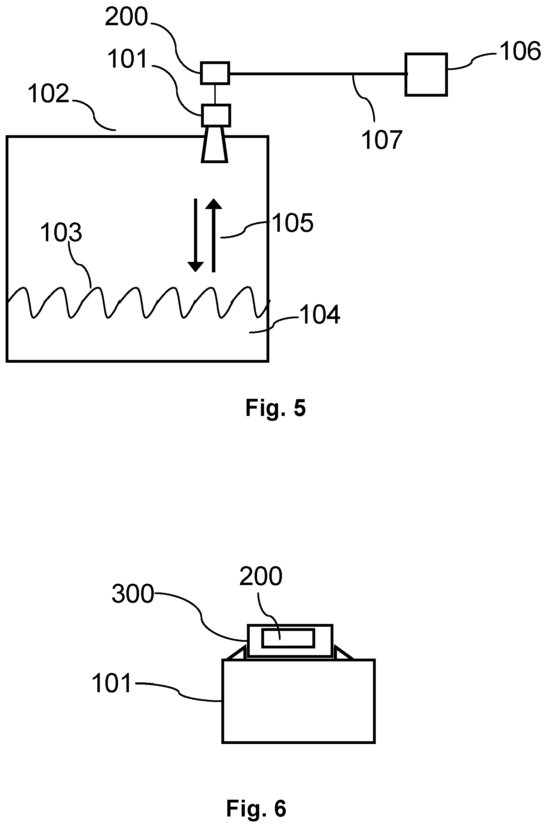

Die Fig. 5 zeigt ein Füllstandmessgerät mit Service Modul nachgerüstet gemäß einer weiteren Ausführungsform der vorliegenden Erfindung.

Die Figur 5 zeigt in Erweiterung zur Figur 1, wie das Service- und Nachrüst-Modul 200 über die Schnittstelle 205 ein Füllstandmessgerät 101 nachrüstet. So ergänzt z.B. das Service- und Nachrüst-Modul das Füllstandmessgerät 101 um eine sichere Schnittstelle 204, beispielsweise betrieben im Strombereich von 4 bis 20 mA. Das Service- und Nachrüst-Modul 200 schafft so eine sichere Verbindung 107 zur Steuerung 106 und genügt somit normativen Ansprüchen.

Anders als in Figur 1 ist die Verbindung 107 jetzt nicht mehr direkt an einer Schnittstelle des Füllstandmessgeräts angeschlossen, sondern wird durch das Service- und Nachrüst-Modul hergestellt. So kann auch hier gemäß einem Ausführungsbeispiel der vorliegenden Erfindung ein Sicherheitsniveau nachgerüstet oder erhöht werden.

Die Fig. 6 zeigt ein Dongle oder Hardware-Modul 300 mit einer Steckverbindungsvorrichtung zum Einstecken in oder Aufdrehen auf ein Füllstandmessgerät 101 und mit einer Service- und Nachrüstvorrichtung 200 gemäß einer weiteren Ausführungsform der vorliegenden Erfindung.

Entsprechend kann auch ein Anzeige- und Bedienmodul mit einer Steckverbindungsvorrichtung ausgebildet werden zum Einstecken in oder Aufdrehen auf ein Füllstandmessgerät und mit einer Service- und Nachrüstvorrichtung gemäß einer weiteren Ausführungsform der vorliegenden Erfindung.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen.

Bezugszeichen in den Ansprüchen sind nicht als Einschränkungen anzusehen.

## Patentansprüche

1. Service- und Nachrüstvorrichtung (200) für ein Füllstandmessgerät (101), wobei die Service- und Nachrüstvorrichtung dazu ausgebildet ist, während einer Inbetriebnahme des Füllstandmessgerätes und/oder während eines Betriebs des Füllstandmessgerätes am Füllstandmessgerät angeschlossen zu sein;
- wobei die Service- und Nachrüstvorrichtung dazu ausgebildet ist, mit einem Bedienterminal für das Füllstandmessgerät gekoppelt zu werden; und
- wobei die Service- und Nachrüstvorrichtung dazu ausgebildet ist, zumindest eine zusätzliche Funktionalität von einer Hard- oder Softwarekomponente für die Inbetriebnahme des Füllstandmessgeräts und/oder für den Betrieb des Füllstandmessgeräts zumindest temporär nachzurüsten, wobei die Hardwarekomponente einen Beschleunigungssensor, oder einen Temperatursensor, oder einen Feuchtesensor umfasst und in der Service- und Nachrüstvorrichtung fest oder temporär als Kaskadierung integriert ist.

2. Service- und Nachrüstvorrichtung gemäß Anspruch 1, wobei die Service- und Nachrüstvorrichtung mit einer Überwachungsfunktion für das Füllstandmessgerät ausgerüstet ist, zum Überwachen des Füllstandmessgeräts während der Inbetriebnahme des Füllstandmessgeräts und/oder während des Betrieb des Füllstandmessgeräts.

3. Service- und Nachrüstvorrichtung gemäß Anspruch 1, wobei ein Bedienterminal nach einer Kopplung mit der Service- und Nachrüstvorrichtung oder die Service- und Nachrüstvorrichtung dazu ausgebildet ist, Schritte zur Inbetriebnahme des Füllstandmessgeräts an einen Benutzer anzuleiten.

4. Service- und Nachrüstvorrichtung gemäß einem der vorhergehenden Ansprüche, wobei die Service- und Nachrüstvorrichtung dazu ausgebildet ist, eine zusätzliche Funktion am Füllstandmessgerät freizugeben.

5. Service- und Nachrüstvorrichtung gemäß einem der vorhergehenden Ansprüche, wobei die Service- und Nachrüstvorrichtung dazu ausgebildet ist, mit einem Cloud-Dienst zu kommunizieren, um mittels des Cloud-Dienstes eine Güte des Messsignals zu ermitteln, um einen sicheren Betrieb des Füllstandmessgeräts zu gewährleisten.

6. Service- und Nachrüstvorrichtung gemäß einem der vorhergehenden Ansprüche, wobei die Service- und Nachrüstvorrichtung dazu ausgebildet ist, bei fester Montage aus einem unsicheren Betrieb des Füllstandmessgerätes einen sicheren Betrieb des Füllstandmessgerätes nachrüstet.

7. Service- und Nachrüstvorrichtung gemäß einem der vorhergehenden Ansprüche, wobei die Service- und Nachrüstvorrichtung dazu ausgebildet ist, ein Sicherheitsniveau des Füllstandmessgerätes zu erhöhen.

8. Service- und Nachrüstvorrichtung gemäß einem der vorhergehenden Ansprüche, wobei die Service- und Nachrüstvorrichtung dazu ausgebildet ist, nach der Inbetriebnahme beim Abziehen, insbesondere bei fester Montage spätestens nach einer vorbestimmten Zeit, das Füllstandmessgerät gegen erneute Änderungen zu sperren.

9. Service- und Nachrüstvorrichtung gemäß einem der vorhergehenden Ansprüche, wobei die Service- und Nachrüstvorrichtung dazu ausgebildet ist, auf einen Anwender personalisiert zu werden, um die Inbetriebnahme zu dokumentieren und den Anwender zu identifizieren.

10. Service- und Nachrüstvorrichtung gemäß einem der vorhergehenden Ansprüche, wobei die Service- und Nachrüstvorrichtung einen Prozessor aufweist und dazu ausgebildet ist, bei der Inbetriebnahme Informationen mit dem Prozessor zu verarbeiten.

11. Service- und Nachrüstvorrichtung gemäß einem der vorhergehenden Ansprüche, wobei die Service- und Nachrüstvorrichtung eine Funkschnittstelle aufweist.

12. Hardware-Dongle (300) oder Hardware-Modul mit einer Steckverbindungsvorrichtung zum Einstecken in oder Aufdrehen auf ein Füllstandmessgerät und mit einer Service- und Nachrüstvorrichtung gemäß einem der vorhergehenden Ansprüche.

13. Anzeige- und Bedienmodul (201) mit einer Steckverbindungsvorrichtung zum Einstecken in oder Aufdrehen auf ein Füllstandmessgerät und mit einer Service- und Nachrüstvorrichtung gemäß einem der vorhergehenden Ansprüche 1 bis 11.

14. Verfahren für einen Service- und Nachrüstprozess für ein Füllstandmessgerät, wobei eine im Service- und Nachrüstprozess verwendete Service- und Nachrüstvorrichtung dazu ausgebildet ist, während einer Inbetriebnahme des Füllstandmessgerätes und/oder während eines Betriebs des Füllstandmessgerätes am Füllstandmessgerät angeschlossen zu sein, wobei das Verfahren folgende Verfahrensschritte umfasst;
- Koppeln der Service- und Nachrüstvorrichtung mit einem Bedienterminal für das Füllstandmessgerät; und
- zumindest temporäres Nachrüsten von zumindest einer zusätzlichen Funktionalität von einer Hard- oder Softwarekomponente für die Inbetriebnahme des Füllstandmessgeräts und/oder für den Betrieb des Füllstandmessgeräts, wobei die Hardwarekomponente einen Beschleunigungssensor, oder einen Temperatursensor, oder einen Feuchtesensor umfasst und in der Service- und Nachrüstvorrichtung fest oder temporär als Kaskadierung integriert ist.

## Claims

1. Service and retrofit device (200) for a level measuring device (101), wherein the service and retrofit device is configured to be connected to the level measuring device during commissioning of the level measuring device and/or during operation of the level measuring device;
- wherein the service and retrofit device is configured to be coupled to an operating terminal for the level measuring device; and
- wherein the service and retrofit device is configured to retrofit at least one additional functionality from a hardware or software component for the commissioning of the level measuring device and/or for the operation of the level measuring device at least temporarily, wherein the hardware component comprises an acceleration sensor, or a temperature sensor, or a humidity sensor and is integrated permanently or temporarily as a cascade in the service and retrofit device.

2. . Service and retrofit device according to claim 1, wherein the service and retrofit device is equipped with a monitoring function for the level measuring device for monitoring the level measuring device during commissioning of the level measuring device and/or during operation of the level measuring device.

3. . Service and retrofit device according to claim 1, wherein an operating terminal, after being connected to the service and retrofit device, or the service and retrofit device is designed to guide a user through the steps for commissioning the level measuring device.

4. . Service and retrofit device according to one of the preceding claims, wherein the service and retrofit device is configured to enable an additional function on the level measuring device.

5. . Service and retrofit device according to one of the preceding claims, wherein the service and retrofit device is configured to communicate with a cloud service in order to determine the quality of the measurement signal by means of the cloud service to ensure safe operation of the level measuring device.

6. . Service and retrofit device according to one of the preceding claims, wherein the service and retrofit device is configured to retrofit the level measuring device from unsafe operation to safe operation when permanently installed.

7. . Service and retrofit device according to one of the preceding claims, wherein the service and retrofit device is configured to increase the safety level of the level measuring device.

8. . Service and retrofit device according to one of the preceding claims, wherein the service and retrofit device is configured to lock the level measuring device against further changes after commissioning when it is removed, in particular when permanently installed, at the latest after a predetermined time.

9. . Service and retrofit device according to one of the preceding claims, wherein the service and retrofit device is configured to be personalized for a user in order to document commissioning and identify the user.

10. . Service and retrofit device according to one of the preceding claims, wherein the service and retrofit device comprises a processor and is configured to process information with the processor during commissioning.

11. . Service and retrofit device according to one of the preceding claims, wherein the service and retrofit device comprises a radio interface.

12. . Hardware dongle (300) or hardware module with a plug-in connection device for plugging into or screwing onto a level measuring device and with a service and retrofit device according to one of the preceding claims.

13. . Display and control module (201) with a plug-in connection device for plugging into or screwing onto a level measuring device and with a service and retrofit device according to one of the preceding claims 1 to 11.

14. . Method for a service and retrofit process for a level measuring device, wherein a service and retrofit device used in the service and retrofit process is configured to be connected to the level measuring device during commissioning of the level measuring device and/or during operation of the level measuring device, wherein the method comprises the following steps:
- coupling the service and retrofit device to an operating terminal for the level measuring device; and
- at least temporarily retrofitting at least one additional functionality of a hardware or software component for commissioning the level measuring device and/or for operating the level measuring device, wherein the hardware component comprises an acceleration sensor, or a temperature sensor, or a humidity sensor and is permanently or temporarily integrated into the service and retrofit device as a cascade.

## Revendications

1. Dispositif de maintenance et de mise à niveau (200) pour un appareil de mesure de niveau de remplissage (101), le dispositif de maintenance et de mise à niveau étant conçu pour être raccordé à l'appareil de mesure de niveau de remplissage pendant une mise en service de l'appareil de mesure de niveau de remplissage et/ou pendant un fonctionnement de l'appareil de mesure de niveau de remplissage ;
- le dispositif de maintenance et de mise à niveau étant conçu pour être couplé à un terminal de commande pour l'appareil de mesure de niveau de remplissage ; et
- le dispositif de maintenance et de mise à niveau étant conçu pour mettre à niveau au moins temporairement au moins une fonctionnalité supplémentaire d'un composant matériel ou logiciel pour la mise en service de l'appareil de mesure de niveau de remplissage et/ou le fonctionnement de l'appareil de mesure de niveau de remplissage, le composant matériel comprenant un capteur d'accélération, un capteur de température, ou un capteur d'humidité et étant intégré de manière fixe ou temporaire dans le dispositif de maintenance et de mise à niveau sous forme de montage en cascade.

2. Dispositif de maintenance et de mise à niveau selon la revendication 1, le dispositif de maintenance et de mise à niveau étant équipé d'une fonction de surveillance pour l'appareil de mesure de niveau de remplissage, destinée à surveiller l'appareil de mesure de niveau de remplissage pendant la mise en service de l'appareil de mesure de niveau de remplissage et/ou pendant le fonctionnement de l'appareil de mesure de niveau de remplissage.

3. Dispositif de maintenance et de mise à niveau selon la revendication 1, un terminal de commande, après avoir été couplé au dispositif de maintenance et de mise à niveau, ou le dispositif de maintenance et de mise à niveau étant conçu pour guider un utilisateur à travers les étapes de mise en service de l'appareil de mesure de niveau de remplissage.

4. Dispositif de maintenance et de mise à niveau selon l'une des revendications précédentes, le dispositif de maintenance et de mise à niveau étant conçu pour activer une fonction supplémentaire sur l'appareil de mesure de niveau de remplissage.

5. Dispositif de maintenance et de mise à niveau selon l'une des revendications précédentes, le dispositif de maintenance et de mise à niveau étant conçu pour communiquer avec un service cloud afin de déterminer, au moyen du service cloud, une qualité du signal de mesure afin de garantir un fonctionnement sécurisé du dispositif de mesure de niveau de remplissage.

6. Dispositif de maintenance et de mise à niveau selon l'une des revendications précédentes, le dispositif de maintenance et de mise à niveau étant conçu pour, en cas de montage fixe, rétablir un fonctionnement sécurisé de l'appareil de mesure de niveau de remplissage à partir d'un fonctionnement non sécurisé de l'appareil de mesure de niveau de remplissage.

7. Dispositif de maintenance et de mise à niveau selon l'une des revendications précédentes, le dispositif de maintenance et de mise à niveau étant conçu pour augmenter le niveau de sécurité de l'appareil de mesure de niveau de remplissage.

8. Dispositif de maintenance et de mise à niveau selon l'une des revendications précédentes, le dispositif de maintenance et de mise à niveau étant conçu pour bloquer l'appareil de mesure de niveau de remplissage contre de nouvelles modifications après la mise en service lors du retrait, en particulier en cas de montage fixe, au plus tard après un délai prédéterminé.

9. Dispositif de maintenance et de mise à niveau selon l'une des revendications précédentes, le dispositif de maintenance et de mise à niveau étant conçu pour être personnalisé pour un utilisateur afin de documenter la mise en service et d'identifier l'utilisateur.

10. Dispositif de maintenance et de mise à niveau selon l'une des revendications précédentes, le dispositif de maintenance et de mise à niveau présentant un processeur et étant conçu pour traiter des informations avec le processeur lors de la mise en service.

11. Dispositif de maintenance et de mise à niveau selon l'une des revendications précédentes, le dispositif de maintenance et de mise à niveau présentant une interface radio.

12. Dongle matériel (300) ou module matériel avec un dispositif de connexion enfichable à enficher ou à visser sur un appareil de mesure de niveau de remplissage et avec un dispositif de maintenance et de mise à niveau selon l'une des revendications précédentes.

13. Module d'affichage et de commande (201) avec un dispositif de connexion enfichable à enficher ou à visser sur un appareil de mesure de niveau de remplissage et avec un dispositif de maintenance et de mise à niveau selon l'une des revendications 1 à 11 précédentes.

14. Procédé pour un processus de maintenance et de mise à niveau d'un appareil de mesure de niveau de remplissage, un dispositif de maintenance et de mise à niveau utilisé dans le processus de service et de mise à niveau étant conçu pour être raccordé à l'appareil de mesure de niveau de remplissage pendant une mise en service de l'appareil de mesure de niveau de remplissage et/ou pendant un fonctionnement de l'appareil de mesure de niveau de remplissage, le procédé comprenant les étapes de procédé consistant à :
- coupler le dispositif de maintenance et de mise à niveau à un terminal de commande pour l'appareil de mesure de niveau de remplissage ; et
- mettre à niveau au moins temporairement au moins une fonctionnalité supplémentaire d'un composant matériel ou logiciel pour la mise en service de l'appareil de mesure de niveau de remplissage et/ou pour le fonctionnement de l'appareil de mesure de niveau de remplissage, le composant matériel comprenant un capteur d'accélération, un capteur de température, ou un capteur d'humidité et étant intégré de manière fixe ou temporaire dans le dispositif de maintenance et de mise à niveau sous forme de cascade.
